# EUROPEAN PATENT APPLICATION

(11) **EP 2 629 498 A1**
(43) Date of publication of application: **21.08.2013**
(21) Application number: 12001061.6
(22) Date of filing: 17.02.2012
(51) Int. Cl.: H04M 1/725, G06K 9/46

(54) **Portable electronic equipment and method of visualizing sound**

(71) Applicant: Sony Ericsson Mobile Communications AB, 221 88 Lund (SE)
(72) Inventor: Hermodsson, Klas, 224 73 Lund (SE)
(74) Representative: Banzer, Hans-Jörg

(57) **Abstract**

A portable electronic equipment comprises an optical output device (2) and a controller configured to receive a sound signal and visual environment data, the visual environment data representing an environment of the portable electronic equipment. The controller is configured to process the received sound signal to identify sound characteristics of the sound signal, to generate graphics (64-66) based on both the received visual environment data and the identified sound characteristics, and to control the optical output device (2) to output the generated graphics (64-66), wherein a location at which the generated graphics (64-66) is output on the optical output device (2) is controlled based on the received visual environment data.

## Description

### FIELD OF THE INVENTION

The invention relates to a portable electronic equipment and to a method of visualizing sound. The invention relates in particular to a portable electronic equipment and to a method in which graphics is generated based on a sound signal.

### BACKGROUND OF THE INVENTION

A wide variety of portable electronic devices is equipped with a speaker to output sound and a display or other optical unit to output graphics. The speaker and display may be activated in combination, e.g. when a movie is played on the portable electronic device or in a video call. Traditionally, the display does not need to be activated when music is being played back, or may be used to display graphics unrelated to the music.

A visualization of sound may provide enhanced user experience to the user of an electronic device. Graphics may be generated and output while music is being played back. For even further enhanced user experience, the graphics may be generated such that it correlates with the music. For illustration, a graphical pattern or a change in graphical pattern may be selected based on the kind of music which is being played back. The graphics may be computer-generated graphics. A sound signal may be processed, and the resulting graphics which depends on the sound signal may be output. Such an approach to sound visualization may be difficult to integrate with the visual data which the user perceives from the environment of the portable electronic equipment. Traditional approaches to sound visualization also provide limited options for the user to interact with the sound visualization. For illustration, one and the same graphics may be output irrespective of the environment in which the user is located while the music is played back.

### SUMMARY OF THE INVENTION

Accordingly, there is a continued need in the art for a portable electronic equipment and for a method which address some of the above shortcomings. There is a continued need in the art for a portable electronic equipment and for a method of visualizing sound which is responsive to the environment in which sound visualization is performed. There is also a need in the art for a portable electronic equipment and for a method of visualizing sound which allows the user to interact with the sound visualization process in a more versatile manner.

According to an embodiment, a portable electronic equipment is provided. The portable electronic equipment comprises an optical output device and a controller. The controller is configured to receive a sound signal and visual environment data, the visual environment data representing an environment of the portable electronic equipment. The controller is coupled to the optical output device. The controller is configured to process the received sound signal to identify sound characteristics of the sound signal. The controller is configured to generate graphics based on both the received visual environment data and the identified sound characteristics. The controller is configured to control the optical output device to output the generated graphics, the controller being configured to control a location at which the generated graphics is output on the optical output device based on the received visual environment data.

In the portable electronic equipment, the visual environment data representing the environment of the portable electronic equipment are taken into account when visualizing sound. The graphics is generated based on both the identified sound characteristics and the visual environment data. This allows the sound-visualizing graphics to be integrated with a real world view of the environment. The user may interact with the sound-visualizing graphics by altering the environment, e.g. using his fingers, hands or arms to alter the visual environment data.

The controller may be configured to identify, based on the visual environment data, object boundaries of objects in the environment, and to generate the graphics based on the identified object boundaries.

The controller may be configured to generate the graphics such that boundaries of the generated graphics are output at positions on the optical output device determined based on the identified object boundaries. The controller may be configured to generate the graphics such that at least some boundaries of the generated graphics, as seen by the user of the portable electronic equipment, coincide with at least some of the identified object boundaries.

The controller may be configured to compute a light field originating from a virtual light source and interacting with the identified object boundaries to generate the graphics. The controller may be configured to identify faces of the objects located in the environment, and to compute the light field obtained when light originating from the virtual light source is scattered and/or reflected at the identified faces.

The controller may be configured to monitor changes in the visual environment data as a function of time and to update the generated graphics in response to a change in position of the identified object boundaries relative to the optical output device.

The controller may be configured to update the generated graphics in response to a change in position of the optical output device relative to the environment. The controller may be configured to update the generated graphics in response to a new object entering a field of view of an image sensor which provides the visual environment data.

The controller may be configured to derive a depth map based on the visual environment data and to generate the graphics based on the depth map. The controller may be configured to perform image segmentation based on the depth map. The controller may be configured to process plural images of the environment recorded with different parallax to derive the depth map.

The controller may be configured to identify a beat of the received sound signal to identify the sound characteristics. The controller may be configured to modify the generated graphics in a time-dependent manner based on the identified beat.

The controller may be configured to modify the generated graphics in a time-- dependent manner such that the generated graphics shows variations which are in accordance with the identified beat.

The controller may additionally or alternatively be configured to identify amplitudes of the received sound signal in a plurality of frequency bands. The controller may be configured to generate the graphics based on the identified amplitudes in the plurality of frequency bands.

The portable electronic equipment may further comprise a speaker to output sound in response to electrical signals, and electrical connections coupled to the speaker to provide the electrical signals to the speaker. The controller may be coupled to the electrical connections to receive the sound signal. The speaker may comprise a loudspeaker. The speaker may comprise a headphone.

The portable electronic equipment may alternatively or additionally comprise a microphone to capture ambient sounds. The controller may be coupled to the microphone to receive the sound signal from the microphone, the sound signal representing the ambient sounds.

The portable electronic equipment may comprise a housing to which the optical output device is mounted. The portable electronic equipment may comprise an image sensor device having at least one image sensor mounted to the housing. The image sensor device may be configured to capture the visual environment data and to provide the captured visual environment data to the controller. The image sensor device may comprise a plurality of image sensors, and the controller may be configured to derive a depth map from images captured by the plurality of image sensors.

The optical output device may be configured as a head-mounted display, which is configured to output the generated graphics as an overlay to a view of the environment visible through the head-mounted display. The optical output device may be configured as a projector projecting the generated graphics onto an object in the environment.

The portable electronic equipment may comprise at least one communication circuit for wireless communication.

According to another embodiment, a method of visualizing sound via an optical output device of a portable electronic equipment is provided. The method comprises receiving a sound signal, and receiving visual environment data representing an environment of the portable electronic equipment. The method comprises processing the received sound signal to identify sound characteristics of the sound signal. The method comprises generating graphics based on both the received visual environment data and the identified sound characteristics. The method comprises controlling the optical output device to output the generated graphics. A location at which the generated graphics is output on the optical output device is controlled based on the received visual environment data.

In the method, the visual environment data representing the environment of the portable electronic equipment are taken into account when visualizing sound. The graphics is generated based on both the identified sound characteristics and the visual environment data. This allows the sound-visualizing graphics to be integrated with a real world view of the environment. The user may interact with the sound-visualizing graphics by altering the environment, e.g. using his fingers, hands or arms to alter the visual environment data.

Object boundaries of objects in the environment may be identified based on the visual environment data. The graphics may be generated based on the identified object boundaries.

The graphics may be generated such that boundaries of the generated graphics are output at positions on the optical output device determined based on the identified object boundaries. The graphics may be generated such that at least some boundaries of the generated graphics, as seen by the user of the portable electronic equipment, coincide with at least some of the identified object boundaries.

A light field originating from a virtual light source and interacting with the identified object boundaries may be determined to generate the graphics. Faces of the objects located in the environment may be identified, and the light field obtained when light originating from the virtual light source is scattered and/or reflected at the identified faces my be determined computationally.

Changes in the visual environment data may be monitored as a function of time. The generated graphics may be updated in response to a change in position of the identified object boundaries relative to the optical output device.

The generated graphics may be updated in response to a change in position of the optical output device relative to the environment. The generated graphics may be updated in response to a new object entering a field of view of an image sensor device which captures the visual environment data.

A depth map may be derived based on the visual environment data. The graphics may be generated based on the depth map. Image segmentation of the visual environment data may be performed based on the depth map. Plural images of the environment captured with different parallax may be processed to derive the depth map.

A beat of the received sound signal may be identified to identify the sound characteristics. The generated graphics may be modified in a time-dependent manner based on the identified beat.

The generated graphics may be modified in a time-dependent manner such that the generated graphics varies as a function of time in accordance with the identified beat.

Additionally or alternatively, amplitudes of the received sound signal may be identified in a plurality of frequency bands. The graphics may be generated based on the identified amplitudes in the plurality of frequency bands.

The portable electronic equipment may further comprise a speaker to output sound in response to electrical signals, and electrical connections coupled to the speaker to provide the electrical signals to the speaker. The sound signal may be received from the electrical connections coupled to the speaker. The speaker may comprise a loudspeaker. The speaker may comprise a headphone.

The portable electronic equipment may alternatively or additionally comprise a microphone to capture ambient sounds. The sound signal may be received from the microphone.

The portable electronic equipment may comprise a housing to which the optical output device is mounted. The portable electronic equipment may comprise an image sensor device having at least one image sensor mounted to the housing. The image sensor device may be configured to capture the visual environment data which are processed to generate the graphics. The image sensor device may comprise a plurality of image sensors, and a depth map may be derived from images captured by the plurality of image sensors.

The optical output device may be configured as a head-mounted display, which outputs the generated graphics as an overlay to a view of the environment visible through the head-mounted display. The optical output device may be configured as a projector projecting the generated graphics onto an object in the environment.

According to yet another embodiment, there is provided a non-transitory storage medium storing instruction code which, when executed by a controller of a portable electronic equipment, directs the portable electronic equipment to perform the method of any one aspect or embodiment.

It is to be understood that the features mentioned above and features yet to be explained below can be used not only in the respective combinations indicated, but also in other combinations or in isolation, without departing from the scope of the present invention. Features of the above-mentioned aspects and embodiments may be combined with each other in other embodiments.

### BRIEF DESCRIPTION OF THE DRAWINGS

The foregoing and additional features and advantages of the invention will become apparent from the following detailed description when read in conjunction with the accompanying drawings, in which like reference numerals refer to like elements.
FIG. 1 shows a portable electronic equipment of an embodiment.
FIG. 2 shows a portable electronic equipment of another embodiment.
FIG. 3 is a functional block diagram representation of the portable electronic equipment of an embodiment.
FIG. 4 is a functional block diagram representation of the portable electronic equipment of an embodiment.
FIG. 5 is a schematic representation illustrating sound visualization by a portable electronic equipment of an embodiment.
FIG. 6 is a schematic representation illustrating sound visualization by a portable electronic equipment of an embodiment when the relative position between optical output device and environment changes.
FIG. 7 is a schematic representation illustrating sound visualization by a portable electronic equipment of an embodiment.
FIG. 8 is a schematic representation illustrating sound visualization by a portable electronic equipment of an embodiment when a user interacts with the sound visualization.
FIG. 9 is a flow chart of a method of an embodiment.
FIG. 10 is a schematic representation illustrating sound visualization by a portable electronic equipment of an embodiment.

### DETAILED DESCRIPTION OF EMBODIMENTS OF THE INVENTION

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations, and elements illustrated in the drawings are not necessarily shown to scale. Rather, the various elements are represented such that their function and general purpose become apparent to a person skilled in the art. Any connection or coupling between functional blocks, devices, components or other physical or functional units shown in the drawings or described herein may also be implemented by an indirect connection or coupling. Functional blocks may be implemented in hardware, firmware, software or a combination thereof. Functional blocks may be combined such that one physical entity performs the functionality of plural functional blocks.

The features of the various embodiments may be combined with each other, unless specifically noted otherwise.

A portable electronic equipment and methods of visualizing sound are described. The portable electronic equipment has an optical output device. Visual environment data representing an environment of the portable electronic equipment are captured and processed when generating graphics to visualize sound. The graphics are generated based on both the visual environment data and a sound signal which represents the sound to be visualized. The graphics may be generated and output such that they form a computer-generated overlay on a real world image. By outputting the graphics over a head-mounted display or other suitable optical output device, the graphics that visualize sound may be directly integrated with an image of the environment seen by the user in direct view.

As used herein, the term "visual environment data" includes two-dimensional arrays of pixel values which have color information (2D image data), depth maps which provide distance information with a spatial resolution (3D image data), or data defining the location and sizes of object faces located in the environment. The "visual environment data" may also have any other format which includes information on the geometry of objects located in the environment of the portable electronic equipment.

The visual environment data may be used in various ways when generating the graphics. Image segmentation may be performed to identify object boundaries in the visual environment data. The graphics may be generated based on the identified object boundaries. For illustration, a light field of a virtual light source may be computed, taking into account reflections and/or scattering at the object boundaries. Alternatively or additionally, graphics may be overlaid onto individual features of objects seen in the visual environment data. The graphics may respectively be made to vary as a function of time, in accordance with the sound signal. Thereby, the graphics may be made to vary in the same rhythm as music or other sound, for example.

The sound signal may be received from an internal source, e.g. from electrical conductors supplying a signal to a speaker when music is being played back. The sound signal may also be captured from external sources. To this end, a microphone may be provided to capture ambient sound. The graphics may be generated based on the visual environment data representing the environment and based on the ambient sound. This allows a visualization of external sound, played over loudspeakers connected to a stationary residential music equipment. The visualization of the sound may be overlaid onto the direct view of objects seen by the user through a head-mounted display, for example. Thereby, the user can be provided with optical effects similar to those experienced in a discotheque, but using computer-generated graphics that simulates light which appears to reflect and/or scatter off the surfaces in the environment of the user. The portable electronic equipment can provide this sort of discotheque feeling, without requiring real light sources to be physically installed in the user's living room, for example.

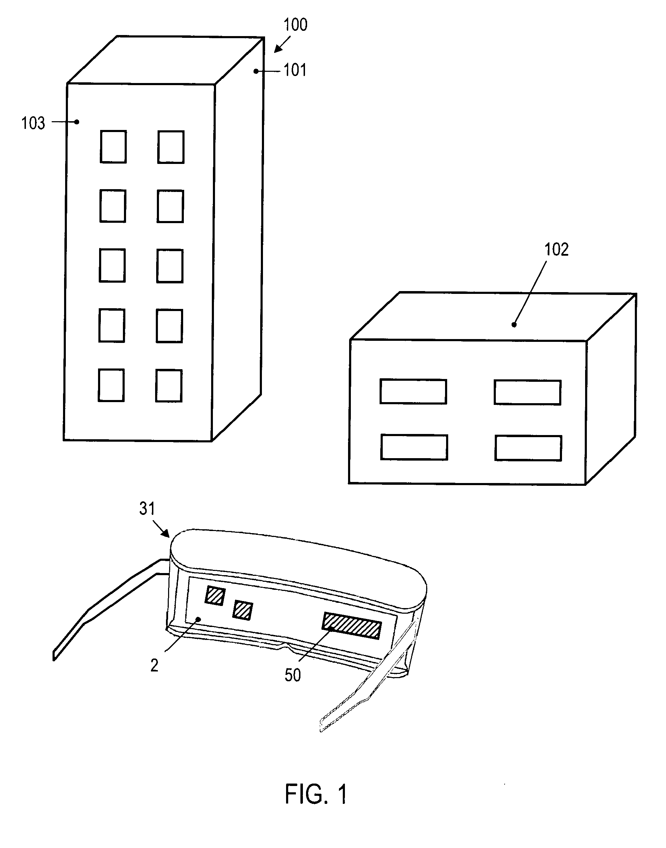

FIG. 1 is a view of a portable electronic equipment 31 according to an embodiment. The portable electronic equipment 31 is configured as a head-mountable device. The portable electronic equipment 31 has an optical output device 2, which is configured as a head-mounted display. The optical output device 2 of the portable electronic equipment 31 may be transparent or semi-transparent, such that an environment 100 can be seen in direct view through the optical output device 2.

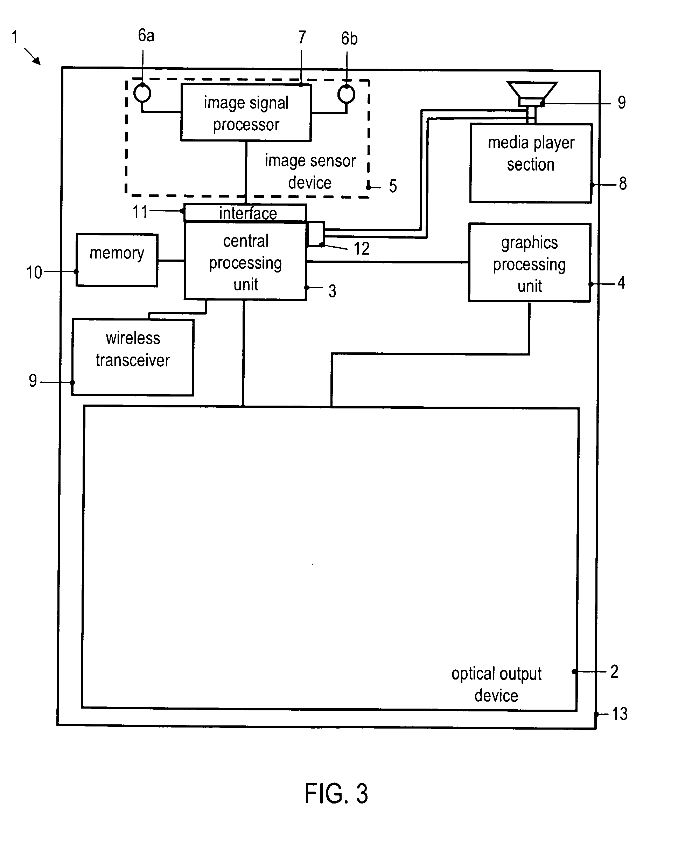

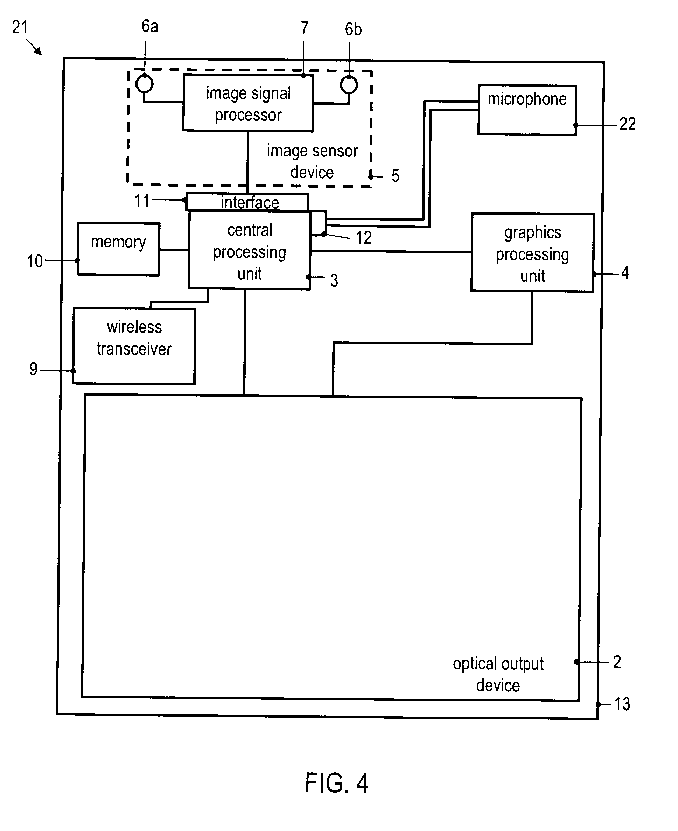

As will be described in more detail with reference to FIG. 3 and FIG. 4, the portable electronic equipment 31 may be equipped with an image sensor device which captures image data of the environment 100. The image data of the environment 100 are an example for visual environment data. The portable electronic equipment 31 may have speakers which provide sound to a user wearing the portable electronic equipment 31 and/or may have a microphone to capture ambient sound. A controller of the portable electronic equipment 31 generates graphics 50 both based on a sound signal which is associated with the sound and based on the captured image data. The controller controls the optical output device 2 to output the generated graphics 50. The position at which the generated graphics 50 is displayed on the optical output device 2 is adjusted based on the image data. The graphics can thereby be integrated into the view of the environment seen through the optical output device 2.

In another implementation of the portable electronic equipment, the visual environment data does not need to be captured locally at the portable electronic equipment. The visual environment data may be received via a wireless network. The portable electronic equipment may transmit a request indicating the current position and, optionally, viewing direction of the portable electronic equipment. The request may be transmitted to a server via a wireless communication network. In response to transmitting the request, the portable electronic equipment may receive the visual environment data via the wireless network, the visual environment data representing an environment of the portable electronic equipment.

The controller of the portable electronic equipment 31 may adjust the generated graphics 50 in a time-varying manner, thereby implementing a video overlay. This may be done in accordance with the captured sound. For illustration, if the sound is music played back via a speaker of the portable electronic equipment 31, the graphics 50 may be made to change its shape or color with a timing which corresponds to a beat of the music. If the sound is a sound signal indicating the user's heartbeat, which may be recorded by a microphone positioned in proximity to the user's ear, the graphics 50 may be made to change its shape or color with a timing which corresponds to the user's heartbeat. If the sound is a sound signal indicating the sound generated as the user's feet touch the ground while the user is walking or running, which may be recorded by a microphone, the graphics 50 may be made to change its shape or color with a timing which corresponds to the user's step frequency.

The controller of the portable electronic equipment 31 may perform any one or any combination of different processing actions for a received sound signal to determine how the graphics 50 is to be modified in accordance with the sound signal. For illustration, a beat of the sound signal may be identified. Alternatively or additionally, spectral analysis may be performed to determine sound amplitudes in various frequency bands. A shape and/or color and/or internal structure of the graphics 50 may be modified in a time-varying manner, in accordance with the sound characteristics of the sound signal derived by the processor.

The controller of the portable electronic equipment 31 may adjust the generated graphics 50 in accordance with a change in the captured image data. When the image data changes as the portable electronic equipment 31 moves relative to the environment 100, the graphics 50 may be displaced accordingly. Characteristic features of the graphics, such as boundaries of the graphics 50, may thereby remain aligned with characteristic features of the environment as seen through the portable electronic equipment 31, even when the portable electronic equipment 31 is rotated or otherwise displaced relative to the environment 100.

The controller of the portable electronic equipment 31 may perform any one or any combination of different processing actions for received image data to determine how the graphics 50 are to be generated in dependence on the image data and where the graphics 50 are to be output on the optical output device 2. For illustration, the controller of the portable electronic equipment 31 may perform image segmentation of image data to identify object boundaries of objects in the environment 100. The controller of the portable electronic equipment 31 may derive a depth map, in which each pixel has a value indicative of a distance of an object from the portable electronic equipment 31. The depth map may be used in image segmentation. The depth map may also be used to identify faces of the objects. Thereby, planar faces of objects may be readily identified. For illustration, recognition of planar faces 101-103 of objects can be performed robustly based on a depth map.

The portable electronic equipment 31 does not only allow sound visualization to be integrated into real world views, but also provides additional ways in which a user may control the sound visualization. For illustration, with the graphics 50 being generated based on objects located in a field of view of the image sensor device, the user may alter the graphics 50 by positioning a finger, hand, arm or other portion of his/her body in the field of view of the image sensor device.

The controller of the portable electronic equipment 31 may not only use the sound signal and image data to generate the graphics 50, but may utilize additional sensor data. For illustration, the portable electronic equipment 31 may comprise or may be coupled to additional sensors which capture the user's mood, heart beat, or other physical conditions. The controller of the portable electronic equipment 31 may generate the graphics 50 based on the user's mood, heart beat, or other physical condition, in addition to taking into account the sound signal and image data. For illustration, a selection among different sound visualization schemes may be made based on the user's mood, heart beat, or other physical condition. Additionally or alternatively, a selection among different color schemes may be made based on the user's mood, heart beat, or other physical condition.

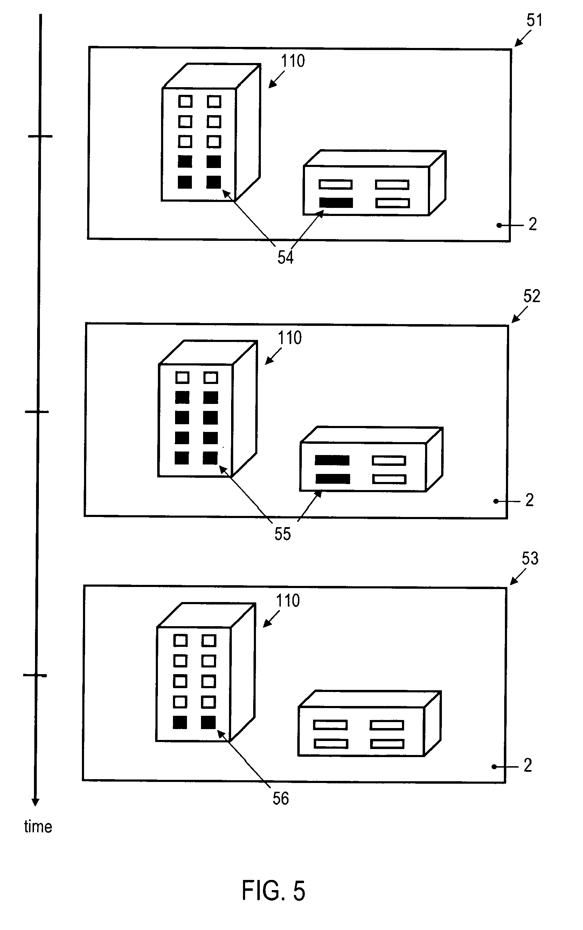

Exemplary graphics which may be generated by the controller of the portable electronic equipment 31 will be explained in more detail with reference to FIGs. 5-8.

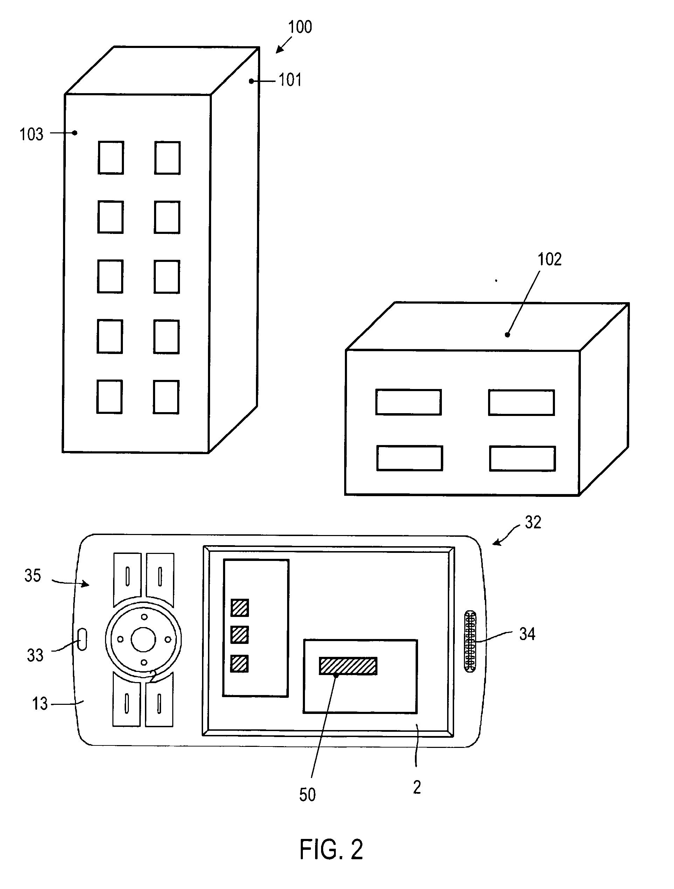

FIG. 2 is a view of a portable electronic equipment 32 according to another embodiment. The portable electronic equipment 32 is configured as a hand-held device. The portable electronic equipment 32 has a optical output device 2 which may be configured as a display.

As will be described in more detail with reference to FIG. 3 and FIG. 4, the portable electronic equipment 32 may be equipped with an image sensor device which captures image data of the environment 100. The portable electronic equipment 32 may have a speaker which provides sound to a user holding the portable electronic equipment 32 and/or may have a microphone to capture ambient sound. A controller of the portable electronic equipment 32 generates graphics 50 both based on a sound signal which is associated with the sound and based on the captured image data. The controller controls the optical output device 2 to output the generated graphics 50. The position at which the generated graphics 50 is displayed on the optical output device 2 is adjusted based on the image data. The graphics can thereby be integrated into the view of the environment seen through the optical output device 2. If the optical output device 2 is not semi-transparent, a live image captured using the image sensor device may also be displayed on the optical output device 2. The graphics 50 is super-imposed onto the live image of the environment.

The controller of the portable electronic equipment 32 may adjust the graphics 50 in a time-varying manner, in accordance with sound characteristics of the sound signal, thereby creating a video overlay. The controller of the portable electronic equipment 32 may adjust the graphics 50 when a position of the portable electronic equipment 32 relative to the environment 100 is altered, or when a new object enters the field of view of the image sensor device. The controller of the portable electronic equipment 32 may perform any one of the processing actions described with reference to FIG. 1 or with reference to FIGs. 3-9.

The portable electronic equipment 32 may be configured as a mobile communication terminal. The portable electronic equipment 32 may include communication componentry, such as a speaker 34 and a microphone 33 for voice communication. When the speaker 34 is used for outputting music, sound signals supplied to the speaker 34 may be sensed by the controller of the portable electronic equipment 32. Alternatively or additionally, if a sound visualization is to be performed for ambient sound, the microphone 33 may be used capture the ambient sound. The controller of the portable electronic equipment 32 may process the sound signal representing the ambient sound and may generate the graphics 50 based on the sound signal. The portable electronic equipment 32 may include control keys 35 which may be hard keys supported on a housing 13 of the portable electronic equipment 32.

FIG. 3 is a functional block diagram representation of a portable electronic equipment 1 of an embodiment. The portable electronic equipment 1 may be configured as a head-mountable device, as shown in FIG. 1, or as a hand-held device, as shown in FIG. 2.

The portable electronic equipment 1 has a controller which may include one or several processors. The controller may include a central processing unit 3 and a dedicated graphics processing unit 4. The controller has a first interface 11 to receive image data from an image sensor device 5. The controller has a second interface 12 to receive a sound signal.

The image sensor device 5 may include a plurality of image sensors 6a and 6b which are mounted to a housing 13 of the portable electronic equipment so as to be spaced from each other. The image sensors 6a and 6b may be two-dimensional opto-electronic sensors configured to perform image sampling to convert optical data into a two-dimensional array of pixel values. An image signal processor 7 may perform pre-processing of images captured by the image sensors 6a, 6b. For illustration, an image captured by image sensor 6a and another image captured by another image sensor 6b may be computationally combined. A depth map may be computed from the images captured by different image sensors 6a, 6b. The image sensors 6a, 6b may be configured as CMOS or CCD-chips, for example.

In another implementation, the image sensor device 5 may include only one two-dimensional opto-electronic sensor. In this case, the portable electronic equipment 1 may include an acceleration sensor or plural acceleration sensors to sense a change in position of the portable electronic equipment 1. A depth map of the environment of the portable electronic equipment 1 may be computed from plural images captured by one two-dimensional opto-electrical sensor, in combination with data indicating a change in position of the portable electronic equipment 1 between two image exposures.

In another implementation, the image sensor device 5 may include a two-dimensional opto-electronic sensor configured to capture a two-dimensional image, and another opto-electronic sensor which captures a depth map indicating distances of objects from the portable electronic equipment. The other opto-electonic sensor may be configured to perform time-of-flight (ToF) measurements.

The controller of the portable electronic equipment 1 receives a sound signal at the second interface 12. The sound signal may be a sound signal received from an internal source. The portable electronic equipment 1 has a media player section 8 configured to play back music. The media player section 8 is coupled to a speaker 9 via electrical connections to control the speaker 9. The speaker 9 may be a headphone or a loudspeaker. The second interface 12 is electrically coupled to the electrical connections which supply electrical signals to the speaker 9 and provide a sound signal indicative of sound output by the speaker 9 to the controller. In another implementation, the second interface 12 may receive digital data indicative of the music that is being played. For illustration, the second interface 12 may be used to receive a media file or portions of a media file, and the digital data may be processed by the controller to identify the beat or other characteristics of the music.

The controller of the portable electronic equipment 1 processes the sound signal to derive sound characteristics. The beat or other characteristics of the sound signal may be derived. The controller of the portable electronic equipment 1 also processes the image data. Graphics are generated based on both the sound characteristics and the image data. The graphics are output via the optical output device 2. The optical output device 2 may be configured as semitransparent display, which allows the graphics to be displayed as an overlay onto a real world view seen through the semi-transparent display. The controller may generate the graphics based on the sound characteristics and the image data such that, when seen by the user, the graphics is integrated with the view of the environment.

The controller of the portable electronic equipment 1 may continuously or intermittently monitor the sound signal and the image data. The graphics are adjusted in a time-varying manner as a function of the sound signal and the image data. For illustration, the graphics may have at least one boundary which is displaced in the rhythm of music. The controller of the portable electronic equipment 1 may also adjust the graphics in response to a change in the image data. A change in the image data may occur when the portable electronic equipment 1 is rotated or otherwise displaced relative to the environment in which it is positioned. The controller of the portable electronic equipment 1 may adapt a position and/or shape of graphics that is being output in response to such a change in image data. This allows generated graphics to be consistently positioned relative to objects of the real world view seen via the optical output device 2. A change in the image data may also occur when a user moves a portion of his or her body in the field of view of the image sensor device 5. The controller of the portable electronic equipment 1 may detect the portion of the user's body as an object and may adapt the graphics based on the detected new object. An adaptation of the graphics may be performed intermittently, e.g. with a time interval given by the frame rate of the image sensor device 5 or by the refresh rate of the optical output device 2.

The portable electronic equipment 1 may comprise additional componentry. For illustration, the portable electronic equipment 1 may further comprise a memory 10 storing instruction code for the central processing unit 3. A wireless transceiver 9 may be coupled to the central processing unit 3. The wireless transceiver 9 may be configured for wireless communication under a wireless communication standard, such as GSM, 3GPP, UMTS, LTE, WLAN, or other communication standards. The central processing unit 3 may control the wireless transceiver 9 so as to enable wireless voice and/or data communication.

The sound signal may not only be derived from sounds originating from an internal source, but may also be recorded from external sources. This allows sound to be visualized even when the user listens to music played back through a residential sound system, for example. Alternatively or additionally, a wide variety of sounds may be visualized, including sounds that derive from the user's physical conditions such as heartbeat signals.

FIG. 4 is a functional block diagram representation of a portable electronic equipment 21 of another embodiment. The portable electronic equipment 21 may be configured as a head-mountable device, as shown in FIG. 1, or as a hand-held device, as shown in FIG. 2. Devices and features which correspond, with regard to their configuration and/or operation, to devices and features explained with reference to FIG. 3 are designated with the same reference numerals.

The portable electronic equipment 21 has a microphone 22 to capture ambient sound. The microphone provides an electrical signal to the second interface 12 of the controller of the portable electronic equipment 1. This sound signal indicative of ambient sound is analyzed by the controller. The controller generates graphics based on both the sound signal and based on image data captured by the image sensor device 5. The graphics may be adjusted in response to changes in the sound signal and in response to changes in the image data. The processing and control operations performed by the controller of the portable electronic equipment 21 may correspond to the processing and control operations of the controllers of any one of the portable electronic equipments of FIGs. 1-3.

Various modifications of portable electronic equipments may be implemented in still other embodiments. For illustration, the sound which is visualized may be sound received over a wireless interface and played back at the portable electronic equipment. The controller of the portable electronic equipment may receive digital data or analog signals indicative of the sound. The controller may process the sound signal and visual environment data to generate graphics visualizing the sound.

Further, the portable electronic equipments of embodiments do not need to locally capture the image data, which are visual environment data. The portable electronic equipments may retrieve the visual environment data over a wireless network. For illustration, the portable electronic equipment may transmit a request including a current geo-location of the portable electronic equipment. In response thereto, the portable electronic equipment may receive visual environment data over the wireless communication network. The visual environment data may represent at least major stationary objects, such as buildings, located in the environment of the current position of the portable electronic equipment. The visual environment data may have any one of a variety of formats, including two-dimensional arrays representing captured images, definitions of buildings in terms of polygons or other descriptions of stationary objects which provide information on at least the geometry of the environment of the portable electronic equipment. The controller may process the received visual environment data based on a viewing direction. The controller may generate the graphics based on the received visual environment data, as an overlay onto a real-world view.

When the portable electronic equipment receives the visual environment data over the mobile communication network, there may be provided an associated server which receives the request from the mobile communication network. The associated server may store information on the visual appearance of buildings in urban areas, for example. The associated server may store this information in the form of captured real-world images. The associated server may alternatively or additionally store this information in the form of polygon-descriptions of building faces, for example. The information may be geo-referenced to allow retrieval based on the current position of the portable electronic equipment. The associated server may transmit data to the portable electronic equipment which are selected based on the current position of the portable electronic equipment. The portable electronic equipment may process these visual environment data to generate sound visualization which combines with the environment.

FIG. 5 illustrates an implementation of graphics generated by the portable electronic equipment and output via the optical output device 2. Various views 51-53 are visible for the user in a time-sequential manner. Each view 51-53 includes a view 110 of real world objects located in the environment 100 of the portable electronic equipment. The objects are located in a field of view of the image sensor device of the portable electronic equipment, and the image data are processed to allow sound visualization to be integrated therewith.

In view 51, graphics 54 are output as an overlay of the view 110 of real world objects. The graphics 54 have boundaries matching boundaries of windows. Image segmentation may be performed in image data to identify the boundaries of windows. The graphics 54 may be generated to have dimensions which are determined based on object features identified in the image data, e.g. based on the width and height of windows recognized in the image data. The graphics 54 may be generated so as to simulate lights visible through the respective windows.

In view 52, updated graphics 55 are output as an overlay of the view 110 of real world objects. The view 52 is visible at a later time, e.g. when the volume of the sound has increased in accordance with the beat of music. The graphics 55 is overlaid onto a greater number of windows seen in the view 110 of real world objects, so as to simulate lights visible through the respective windows. In view 53, updated graphics 56 are output as an overlay of the view 110 of real world objects. The view 53 is visible at a later time, e.g. when the volume of the sound has decreased again in accordance with the beat of music. The graphics 56 is overlaid onto a smaller number of windows seen in the view 110 of real world objects, so as to simulate lights visible through the respective windows.

In the implementation illustrated with reference to FIG. 5, music is visualized in a way which integrates the sound visualization with a view of real world objects in the environment of the portable electronic equipment as seen by the user. The beat of the music may be visualized by simulating that lights are turned on and off behind windows in the rhythm of the music.

In FIG. 5, the visualization of sound is illustrated for a case in which the position of the portable electronic equipment relative to the environment remains invariant. Changes in position of the portable electronic equipment may be readily accommodated, so that the graphics are consistently positioned relative to real world objects even when the position of the portable electronic equipment changes relative to the environment.

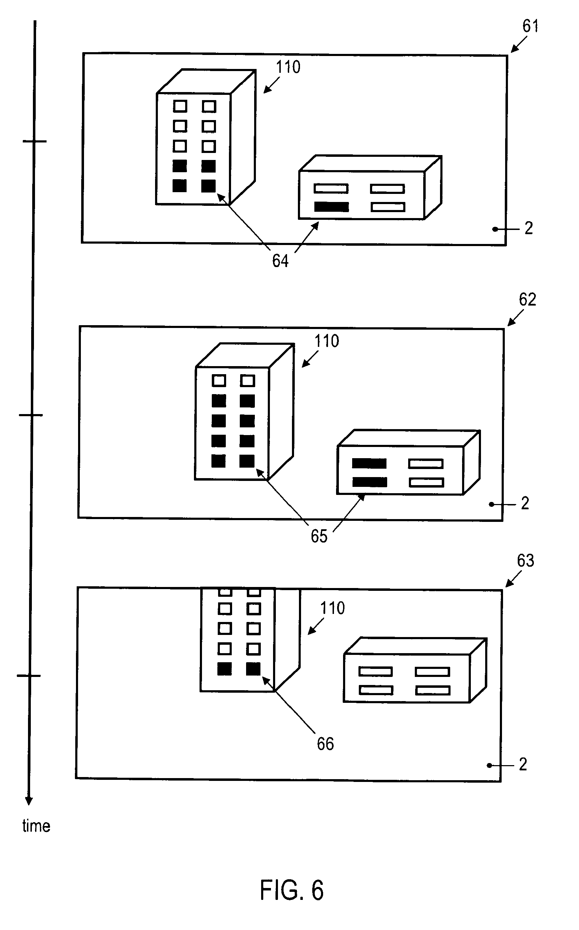

FIG. 6 illustrates an implementation of graphics generated by the portable electronic equipment and output via the optical output device 2, which is similar to FIG. 5. Various views 61-63 are visible for the user in a time-sequential manner. The position between the portable electronic equipment and the environment changes while the series of views 61-63 are visible to the user. The sound-dependent graphics output via the optical output device is adjusted in accordance with the relative displacement between optical output device and environment.

In view 61, graphics 64 are output as an overlay of the view 110 of real world objects.

In view 62, updated graphics 65 are output as an overlay of the view 110 of real world objects. The view 62 is visible at a later time, e.g. when the volume of the sound has increased in accordance with the beat of music. The graphics 65 is overlaid onto a greater number of windows seen in the view 110 of real world objects, so as to simulate lights visible through the respective windows. The position at which the graphics 65 is displayed is modified as compared to view 52 in FIG. 5, to accommodate a shift in position of the optical output device 2 relative to the environment. The graphics 65 is shown at a consistent position relative to real world objects as seen via the optical output device.

Similarly, in view 63, updated graphics 66 are output as an overlay of the view 110 of real world objects. The view 63 is visible at a later time, e.g. when the volume of the sound has decreased again in accordance with the beat of music. The graphics 66 is overlaid onto a smaller number of windows seen in the view 110 of real world objects, so as to simulate lights visible through the respective windows. The position at which the graphics 66 is displayed is modified as compared to view 62 in FIG. 5, to accommodate a shift in position of the optical output device 2 relative to the environment. The graphics 66 is shown at a consistent position relative to real world objects as seen via the optical output device.

A wide variety of different visualization schemes may be supported by a portable electronic equipment. For further illustration, additionally or alternatively to overlaying colored patches onto object features as illustrated in FIG. 5 and FIG. 6, the light field resulting from a virtual light source may be computed. The interaction of the light field with real world objects, e.g. by reflection and/or scattering, may be numerically simulated by the controller of the portable electronic equipment.

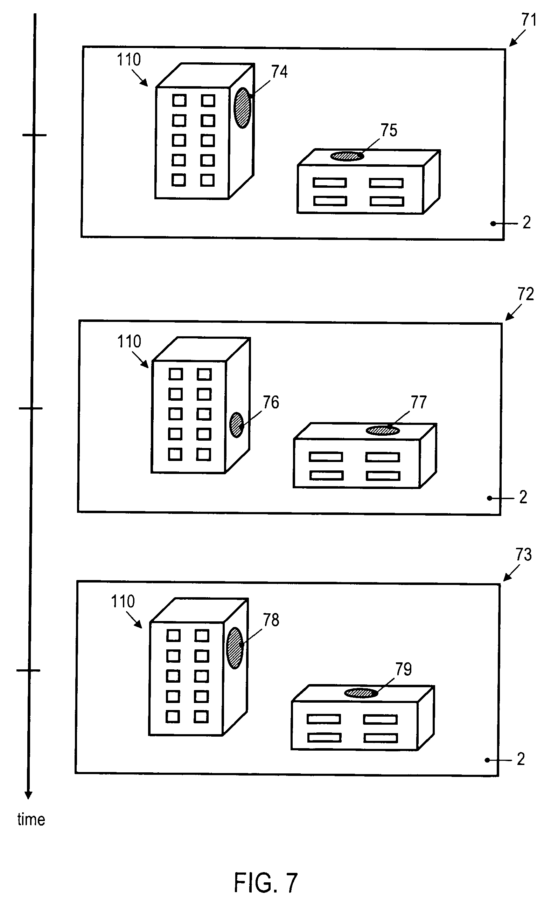

FIG. 7 illustrates another implementation of graphics generated by the portable electronic equipment and output via the optical output device 2. Various views 71-73 are visible for the user in a time-sequential manner. Each view 71-73 includes a view 110 of real world objects located in the environment 100 of the portable electronic equipment. The objects are located in a field of view of the image sensor device of the portable electronic equipment, and the image data are processed to allow sound visualization to be integrated therewith. For each of the views 71-73, the area of incidence of light cones onto faces of objects is computed. This may be done numerically for light cones emitted by one or plural virtual light sources. A movement of the light cones in accordance with the beat of the sound may be simulated, resulting in a change in the area of incidence on the objects according to the beat of the sound. The faces of objects may be identified in the image data using a depth map. For illustration, planar object faces oriented normal to a viewing direction may be recognized as connected areas having similar pixel values in a depth map.

In view 71, graphics 74 representing the area of incidence of a first light cone onto a face of an object is output at a position which matches the position of the face as seen by the user. Graphics 75 representing the area of incidence of a second light cone onto another face of an object is output at a position which matches the position of the other face as seen by the user. The interaction of virtual light sources with objects from real view may thus be simulated. The user may be provided with a realistic view which corresponds to that obtained when using a real light source emitting light cones towards the objects, without requiring such a real light source to be physically provided.

A change in color and/or direction of the light cones may be simulated, and the graphics may be updated accordingly. In view 72, graphics 76 representing the area of incidence of the first light cone onto the face of an object is output at a position which matches the position of the face as seen by the user, so as to simulate a movement of the first light cone across the face. Graphics 77 representing the area of incidence of the second light cone onto the other face of an object are output at a position which matches the position of the other face as seen by the user, so as to simulate a movement of the second light cone across the other face of an object. Similarly, in view 73, graphics 78 and 79 are output as an overlay to the view 110 of real world objects.

As described with reference to FIG. 5 and FIG. 6, a change in position of the portable electronic equipment relative to the environment is accounted for. When the position of the optical output unit 2 is altered, the controller adjusts the positions at which the graphics 74-79 are output such that the graphics 74-79 remain consistently positioned at locations which correspond to faces of real world objects, as seen by the user.

The controller of the portable electronic equipment adjusts the graphics in response to a change in image data. This allows the user to interact with sound visualization, by positioning his finger, hand, arm or other portion of his/her body in the field of view of the image sensor device.

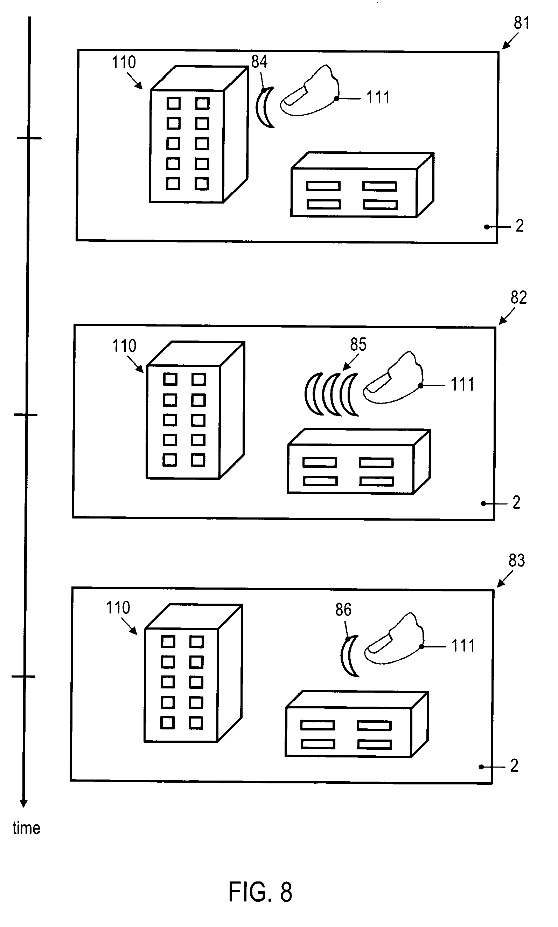

FIG. 8 illustrates another implementation of graphics generated by the portable electronic equipment and output via the optical output device 2. Various views 81-83 are visible for the user in a time-sequential manner. Each view 81-83 includes a view 110 of real world objects located in the environment 100 of the portable electronic equipment. The view of real world objects includes a finger 111 which the user positions in the field of view of the image sensor device to interact with the sound visualization. The controller of the portable electronic equipment recognizes the finger 111 as an object in the image data. The controller generates graphics based on the image data and the sound signal. The controller adjusts the graphics in response to the change in position of the user's finger. Similarly, the controller adjusts the graphics when the user moves the finger into the field of view of the image sensor device, or moves the finger out of the field of view of the image sensor device.

In view 81, graphics 84 representing a light field interacting with finger 111 is displayed as an overlay. The graphics is adjusted according to the beat of the sound. For illustration, when the sound amplitude increases, the size of the graphics may be increased. In view 82, updated graphics 85 is output which has enlarged dimensions compared to graphics 84, in accordance with a higher sound volume. In view 83, updated graphics 86 is output which has smaller dimensions than graphics 85, in accordance with a lower sound volume. The position at which the graphics 84-86 is output is adjusted as the user moves his/her finger relative to the portable electronic equipment.

While implementations of sound visualization schemes have been explained with reference to FIGs. 5-8, a wide variety of other sound visualization schemes may be supported by a portable electronic equipment. For illustration, the spectral characteristics of sound may be used to generate graphics, in addition to or alternatively to using the beat of the sound. Not only outer boundaries, but also colors of output graphics may be adjusted in accordance with the sound characteristics derived from the sound signal and in accordance with the image data. Sound visualization schemes may also involve the generation of graphics that simulate physical objects interacting with the environment. For illustration, the movement of a ball bouncing off object faces of the environment may be simulated, and the ball may be displayed as an overlay moving in accordance with the sound.

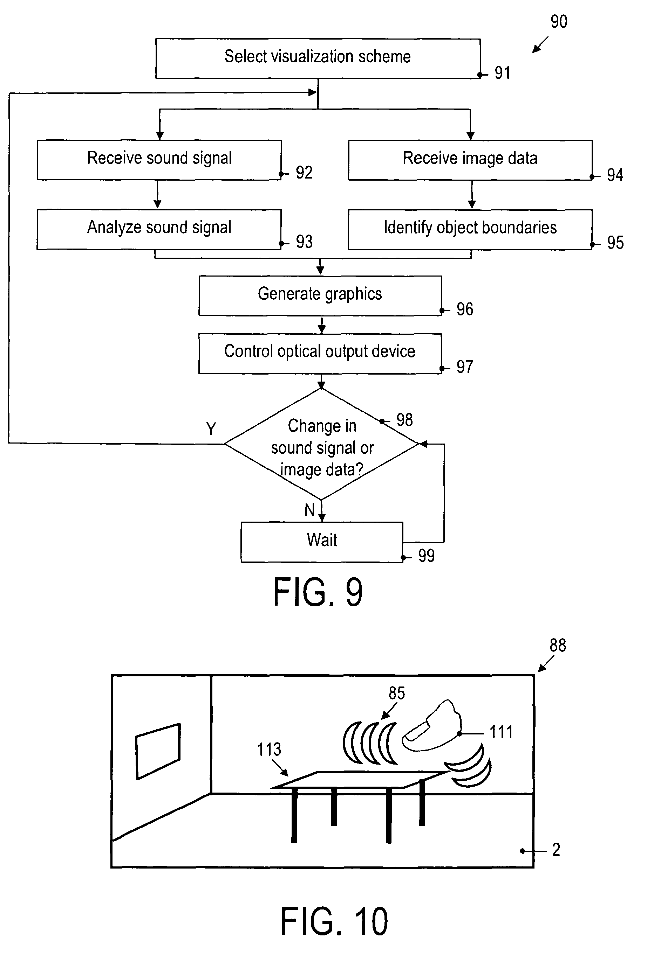

FIG. 9 is a flow chart of a method of an embodiment. The method is generally indicated at 90. The method may be performed by the portable electronic equipment, as explained with reference to FIGs. 1-8.

At 91, a sound visualization scheme is selected. A portable electronic equipment may support various different sound visualization schemes, as exemplarily illustrated with reference to FIGs. 5-8.

At 92, a sound signal is received. The sound signal may be received from an internal source. The sound signal may be received from a media player section or from electrical connections supplying signals to a speaker. The sound signal may be received from a microphone which captures ambient sound. At 93, the sound signal is analyzed to determine sound characteristics. The sound characteristics may include a beat of the sound signal. The sound characteristics may include amplitudes of the sound signal in plural frequency bands.

At 94, image data is received. The image data may be live image data captured by an image sensor device in parallel with the playing back of music and/or the capturing of ambient sound. The image data represents an environment of the portable electronic equipment. At 95, the image data are processed. The processing at 95 may include performing an image segmentation to identify object boundaries in the image data.

At 96, graphics is generated based on both the sound characteristics and the image data. The graphics may include boundaries set as a function of object boundaries determined at 95. The boundaries of the graphics may also depend on the sound characteristics.

At 97, the optical output device is controller to output the generated graphics. A position at which the generated graphics is output on the optical output device is controlled based on the image data. The generated graphics may be time-varying.

At 98, it is determined whether the sound signal and/or image data has changed. A threshold comparison may be performed in the determining at 98. If the sound signal and/or image data has not changed or has changed by less than a threshold, the monitoring is repeated after a wait period at 99. When the sound signal and/or image data is changed, the processing at 92-97 is repeated to update the graphics. The graphics may be updated in response to the change in sound signal and/or in response to the change in image data. The visualization of sound may be kept consistent with real world objects seen by the user, thereby integrating the visualization of the sound into the view of the environment. In another implementation, the processing at 92-97 may be automatically repeated. Steps 92-97 may be repeated continuously or intermittently. If steps 92-97 are repeated intermittently, the repetition rate may be set based on a frame rate of the image sensor device or based on a refresh rate of the optical output device.

The graphics output via the optical output device at 97 may not only be altered in response to a change in sound signal or image data. The graphics output via the optical output device may be adjusted in a time-varying manner according to a predefined processing flow, while there is no change in sound signal or image data. For illustration, when the graphics is generated to simulate a moving light source, the graphics may be adjusted in a time-varying manner to simulate the movement of the light source.

While portable electronic equipments and methods of visualizing sound have been described with reference to the drawings, modifications and alterations may be implemented in further embodiments. For illustration rather than limitation, while the generation of sound-visualizing graphics has been illustrated in the context of an environment which includes buildings, the integration of sound-visualizing graphics into an environmental view may have applicability for a wide variety of different situations.

FIG. 10 illustrates a view 88 visible for the user when the portable electronic equipment is used inside a building. Graphics 89 is integrated into a view 113 of the real-world objects visible to the user. The graphics 89 may be adjusted in response to a user action. For illustration, the graphics 89 may be adjusted when the user moves around a portion of his body in the field of view of an image sensor, as explained with reference to FIG. 8.

For further illustration, while exemplary implementations for image sensor devices have been explained, the image sensor device may also have any one of a variety of other configurations. For illustration, the image sensor device may include a camera which performs time-of-flight measurements to aid image segmentation. The portable electronic equipments do not need to have an image sensor. The visual environment data indicative of the environment of the portable electronic equipment may also be retrieved over a wireless communication network.

For further illustration, the optical output device may also include a projector. The optical output device may include a plurality of displays to generate and output a three-dimensional view of the sound-visualizing graphics, or may include another implementation of a stereoscopic display.

For further illustration, output signals of additional sensors may be taken into account when visualizing sound. The portable electronic equipment may comprise or may interface with sensors which measure the user's physical condition. Such sensors may include a sensor measuring skin resistance, for example. Such sensors may also include another image sensor device which captures the user's facial expression and analyzes the user's facial expression to detect a smile. This allows the visualization of sound to be adjusted in accordance with physical conditions or mood.

The portable electronic equipments and the methods of embodiments provide enhanced user experience when sound is visualized. The sound visualization may be integrated into a real word view of objects in the environment. The user may also interact with the sound visualization. Examples of portable electronic equipments which may be configured as described herein include, but are not limited to, head-mountable devices or mobile communication terminals.

## Claims

1. A portable electronic equipment, comprising:
an optical output device (2); and
a controller (3, 4) configured to receive a sound signal and visual environment data, the visual environment data representing an environment (100) of the portable electronic equipment (1; 21; 31; 32);
the controller (3, 4) being coupled to the optical output device (2) and being configured to:
process the received sound signal to identify sound characteristics of the sound signal;
generate graphics (50; 54-56; 64-66; 74-79; 84-86) based on both the received visual environment data and the identified sound characteristics; and
control the optical output device (2) to output the generated graphics (50; 54-56; 64-66; 74-79; 84-86), the controller (3, 4) being configured to control a location at which the generated graphics (50; 54-56; 64-66; 74-79; 84-86) is output on the optical output device (2) based on the received visual environment data.

2. The portable electronic equipment of claim 1,
the controller (3, 4) being configured to identify, based on the visual environment data, object boundaries (101-103) of objects in the environment (100), and to generate the graphics (50; 54-56; 64-66; 74-79; 84-86) based on the identified object boundaries (101-103).

3. The portable electronic equipment of claim 2,
the controller (3, 4) being configured to generate the graphics (50; 54-56; 64-66; 74-79; 84-86) such that boundaries of the generated graphics (50; 54-56; 64-66; 74-79; 84-86) are output at positions on the optical output device (2) determined based on the identified object boundaries (101-103).

4. The portable electronic equipment of claim 2 or claim 3,
the controller (3, 4) being configured to compute a light field originating from a virtual light source and interacting with the identified object boundaries (101-103) to generate the graphics (74-79).

5. The portable electronic equipment of any one of claims 2-4,
the controller (3, 4) being configured to monitor changes in the visual environment data as a function of time and to update the generated graphics (54-56; 64-66; 74-79; 84-86) in response to a change in position of the identified object boundaries (101-103) relative to the optical output device (2).

6. The portable electronic equipment of claim 5,
the controller (3, 4) being configured to update the generated graphics (64-66) in response to a change in position of the optical output device (2) relative to the environment (100).

7. The portable electronic equipment of any one of claims 2-6,
the controller (3, 4) being configured to determine a depth map based on the visual environment data and to generate the graphics (50; 54-56; 64-66; 74-79; 84-86) based on the determined depth map.

8. The portable electronic equipment of any one of the preceding claims,
the controller (3, 4) being configured to identify a beat of the received sound signal to identify the sound characteristics,
the controller (3, 4) being configured to modify the generated graphics (54-56; 64-66; 74-79; 84-86) in a time-dependent manner based on the identified beat.

9. The portable electronic equipment of claim 8,
the controller (3, 4) being configured to modify the generated graphics (50; 54-56; 64-66; 74-79; 84-86) in a time-dependent manner such that a boundary of the generated graphics (50; 54-56; 64-66; 74-79; 84-86) varies in accordance with the identified beat.

10. The portable electronic equipment of any one of the preceding claims, further comprising:
a speaker (9) to output sound in response to electrical signals; and
electrical connections coupled to the speaker (9) to provide the electrical signals to the speaker (9);
the controller (3, 4) being coupled to the electrical connections to receive the sound signal.

11. The portable electronic equipment of any one of the claims 1-9, further comprising:
a microphone (22) to capture ambient sounds;
the controller (3, 4) being coupled to the microphone (22) to receive the sound signal.

12. The portable electronic equipment of any one of the preceding claims, further comprising:
a housing (13) to which the optical output device (2) is mounted; and
an image sensor device (5) having at least one image sensor (6a, 6b), the image sensor device (5) being configured to capture the visual environment data and to provide the captured visual environment data to the controller (3, 4), the image sensor device (5) being mounted to the housing (13).

13. The portable electronic equipment of any one of the preceding claims,
wherein the optical output device (2) is configured as a head-mounted display configured to output the generated graphics (50; 54-56; 64-66; 74-79; 84-86) as an overlay to a view (110) of the environment (100) visible through the head-mounted display.

14. A method of visualizing sound via an optical output device (2) of a portable electronic equipment (1; 21; 31; 32), the method comprising:
receiving a sound signal;
receiving visual environment data representing an environment (100) of the portable electronic equipment (1; 21; 31; 32);
processing the received sound signal to identify sound characteristics of the sound signal;
generating graphics (50; 54-56; 64-66; 74-79; 84-86) based on both the received visual environment data and the identified sound characteristics; and
controlling the optical output device (2) to output the generated graphics (50; 54-56; 64-66; 74-79; 84-86), wherein a location at which the generated graphics (50; 54-56; 64-66; 74-79; 84-86) is output on the optical output device (2) is controlled based on the received visual environment data.

15. The method of claim 14,
performed using the portable electronic equipment (1; 21; 31; 32) of any one of claims 1-13.
